**Europäisches Patentamt**

(19) **European Patent Office**

**Office européen des brevets**

(11) Veröffentlichungsnummer: **0 236 511**
**B1**

(12) **EUROPÄISCHE PATENTSCHRIFT**

(45) Veröffentlichungstag der Patentschrift:
26.07.89

(21) Anmeldenummer: **85115821.2**

(22) Anmeldetag: **12.12.85**

(51) Int. Cl.⁴: **B62D 11/18**

(54) Hydraulische Steuerungsanlage.

(43) Veröffentlichungstag der Anmeldung:
16.09.87 Patentblatt 87/38

(45) Bekanntmachung des Hinweises auf die Patenterteilung:
26.07.89 Patentblatt 89/30

(84) Benannte Vertragsstaaten:
AT CH DE IT LI

(56) Entgegenhaltungen:
DE-A- 2 403 123
DE-A- 2 434 514
DE-A- 3 208 261
DE-A- 3 213 361
DE-B- 2 152 726

(73) Patentinhaber: **Karl Kässbohrer Fahrzeugwerke GmbH,**
**Kässbohrerstrasse, D-7900 Ulm (Donau)(DE)**

(72) Erfinder: **Haas Karl Heinrich, Forstweg 18,**
**D-7915 Oberelchingen(DE)**

(74) Vertreter: **Patentanwälte Grünecker, Kinkeldey,**
**Stockmair & Partner, Maximilianstrasse 58,**
**D-8000 München 22(DE)**

## Beschreibung

Die Erfindung bezieht sich auf eine hydraulische Steuerungsanlage für die Geschwindigkeits- und Richtungsänderung eines hydraulisch betriebenen Kettenfahrzeuges mit einer Speisepumpe für das Steuerfluid und hydraulischen Fahrwerkspumpen mit durch das Steuerfluid beaufschlagten Stellzylindern für die Verstellung des Pumpenschwenkwinkels, wobei die Stellzylinder jeweils mit zwei durch einen Stellkolben voneinander getrennten Stellzylinderkammern versehen sind, wobei für die Geschwindigkeitsänderung in einer von der Speisepumpe kommenden Versorgungsleitung ein Proportionalventil vorgesehen ist, welches mit den Stellzylinderkammern verbunden ist, und wobei ferner für die Richtungsänderung ein mechanisch gesteuertes Druckregelventil mit jeweils zwei entgegengesetzt wirkenden Stellzylinderkammern in Verbindung steht.

Eine solche hydraulische Steuerungsanlage ist aus der DE-OS 2 434 514 bekannt. Dort erfolgt die Lenkbewegung dadurch, daß die kurveninnere Kette des Kettenfahrzeuges abgebremst wird, während die kurvenäußere Kette mit unveränderter Geschwindigkeit weiterläuft. Dadurch hat jede Lenkbewegung des Kettenfahrzeuges unwillkürlich eine Abbremsung des Fahrzeuges zur Folge.

Demgegenüber liegt der Erfindung die Aufgabe zugrunde, eine Steuerungsanlage der eingangs genannten Art konstruktiv einfach derart zu verbessern, daß die Lenkbewegung und die Geschwindigkeitsänderung des Kettenfahrzeuges unabhängig voneinander erfolgen.

Diese Aufgabe wird erfindungsgemäß dadurch gelöst, daß die Stellzylinderkammern über Wechselventile unabhängig jeweils mit dem Proportionalventil und mit dem mechanisch gesteuerten Druckregelventil verbunden sind, wobei das mechanisch gesteuerte Druckregelventil an eine Versorgungsleitung angeschlossen ist, die vor dem Proportionalventil von der Versorgungsleitung abzweigt.

Auf diese Weise wird eine konstruktiv einfache hydraulische Steuerungsanlage geschaffen, welche es ermöglicht, Lenkbewegungen des Kettenfahrzeuges unabhängig von einer Geschwindigkeitsänderung des Fahrzeuges vorzunehmen. Das erste Proportionalventil für die Geschwindigkeitsänderung wird nunmehr völlig unabhängig von dem zweiten Proportionalventil für die Geschwindigkeitsänderung des Fahrzeuges getätigt. Es bleibt nunmehr nicht mehr dem Fahrer überlassen, die Ideallinie für eine Kurve durch das Gegeneinanderverstellen zweier Betätigungselemente herauszufinden. Da das zweite Proportionalventil mit den entgegengesetzt wirkenden Stellzylinderkammern der beiden Stellzylinder verbunden ist, wird bei einer Kurvenfahrt bewirkt, daß sich die eine Kette gegenüber der Geradeausfahrt schneller und die andere Kette langsamer bewegt. Es wird erreicht, daß die Mitte des Fahrzeuges bei der Kurvenfahrt die gleiche Geschwindigkeit beibehält, wie bei Geradeausfahrt. Es ergibt sich für das Kettenfahrzeug ein Kurvenverhalten, welches dem von Radfahrzeugen entspricht.

Es gibt bereits kombinierte hyraulische und elektrische Steuerungsanlagen, bei denen praktisch die Betätigungselemente der eingangs erwähnten bekannten hydraulischen Steuerunganlage mittels elektrischen Proportionalstellgliedern bewegt werden. Die Abstimmung der Verstellung der Fahrwerkspumpen zum Lenken des Fahrzeuges erfolgt über eine elektrische Schaltung. Nachteilig an diese Steuerungsanlage ist,daß neben dem ohnehin vorhandenen hydraulischen System ein zweites kompliziertes elektrisches System vorhanden sein muß, welches neben der konstruktiven Aufwendigkeit außerdem auch die Ausfallwahrscheinlichkeit der Steuerungsanlage erhöht. Bereits ein Spannungsabfall in der bordeigenen Stromversorgung wurde zum Ausfall der Steuerungsanlage führen. Aufgrund dieser Umstände ist eine solche Steuerungsanlage allenfalls für den Einsatz von Kettenfahrzeugen im Gelände denkbar.

Gemäß einer Weiterbildung der Erfindung sind zwei zweite Proportionalventile vorhanden, wovon das eine für die Richtungsänderung nach rechts und das andere für die Richtungsänderung nach links vorgesehen ist. Obwohl nun zwei Proportionalventile vorhanden sind, ist für das Kurvenfahren gegenüber der bekannten hydraulischen Steuerungsanlage nur die Betätigung eines Proportionalventiles notwendig, um eine optimale Abstimmung der Kettengeschwindigkeiten für die Kurvenfahrt zu erreichen.

Besonders günstig ist es, wenn die beiden zweiten Proportionalventile mittels wenigstens einer an der Steuersäule eines Lenkrades angebrachter Kurvenscheibe betätigbar sind. So kann beispielsweise bei Betätigung des Lenkrades nach rechts abhängig von dem Einschlagwinkel des Lenkrades das Proportionalventil für die Richtungsänderung nach rechts betätigt werden, während bei einem Lenkeinschlag nach links über die Kurvenscheibe das Proportionalventil für die Richtungsänderung nach links betätigt werden kann.

Für die Betätigung des ersten Proportionalventiles, welches im Gegensatz zu der bekannten Steuerungsanlage nicht mehr über die Betätigungselemente für die Richtungsänderung betätigt werden kann, ist es günstig, wenn das erste Proportionalventil mittels eines durch ein Potentiometer umfassendes Gaspedal betätigbaren elektrischen Proportionalstellgliedes steuerbar ist. Auf diese Weise kann wie bei einem herkömmlichen Radfahrzeug mit dem Gaspedal die Geschwindigkeit des Kettenfahrzeuges reguliert werden. Das Gaspedal bewirkt dabei zu einen die Drehzahlerhöhung des die Fahrwerkspumpen antreibenden Motors wie auch eine Verstellung des Pumpenschwenkwinkels der Fahrwerkpumpen.

Insbesondere für das Befahren steiler Hänge ist es vorteilhaft, daß in Reihe zu dem Potentiometer ein betätigbarer Höchstspannungsbegrenzer für die Begrenzung der größtmöglichen Auslenkung des Proportionalventiles vorgesehen ist. Somit kann die maximale Verstellung des Pumpenschwenkwinkels festgelegt werden, was in der Praxis der Festlegung eines maximalen Übersetzungsverhältnisses entspricht. Mit dem Gaspedal kann allerdings nun weiterhin die Drehzahl des antreibenden Motors variiert werden, so daß immer im günstigsten Drehmomentbereich gefahren werden kann. Auf diese Weise ist es auch möglich, bei immer steiler werdenden Hängen bei durchgetretenem Gaspedal mit dem betätigbarem Höchstspannungsbegrenzer den Pumpenschwenkwinkel der Fahrwerkspumpen zu verringern, um somit ein günstigeres Übersetzungsverhältnis zu erreichen. Besonders in diesem Zusammenhang ist es günstig, wenn der Höchstspannungsbegrenzer von Hand betätigbar an der Lenksäule angebracht ist.

Auf einfache Weise kann die Richtungsumkehr des Kettenfahrzeuges dadurch ermöglicht werden, daß zwischen dem ersten Proportionalventil und den Wechselventilen ein 4/2-Wegeventil derart angeordnet ist, daß zur Richtungsumkehr des Fahrzeuges in einer zweiten Schaltstellung die jeweils anderen gleichwirkenden Stellzylinderkammern der Stellzylinder mit dem Proportionalventil verbunden sind.

Besonders günstig ist es dabei, daß das 4/2-Wegeventil mit einem weiteren, zwischen den zweiten Proportionalventilen und den Wechselventilen angeordneten 4/2-Wegeventil derart gekoppelt ist, daß bei Richtungsumkehr des Fahrzeuges die jeweils anderen entgegengesetzt wirkenden Stellzylinderkammern der Stellzylinder mit den zweiten Proportionalventilen verbunden sind. Auf diese Weise wird erreicht, daß auch bei Rückwärtsfahrt des Kettenfahrzeuges ein Einschlag des Lenkrades nach rechts auch eine Kurvenfahrt des Fahrzeuges nach rechts bewirkt.

Gemäß einer bevorzugten Ausführungsform sind bei der hydraulischen Steuerungsanlage zwei Fahrwerkspumpen mit zwei Stellzylindern vorgesehen, deren Stellzylinderkammern über vier Wechselventile einerseits über das erste 4/2-Wegeventil mit dem ersten Proportionalventil für die Geschwindigkeitsänderung und andererseits über das zweite 4/2-Wegeventil mit den zweiten Proportionalventilen die Richtungsänderung verbunden sind.

Vorteilhaft ist es, wenn die miteinander gekoppelten 4/2-Wegeventile über einen Fahrtrichtungsschalter elektrisch betätigbar sind.

Im folgenden wird ein Ausführungsbeispiel der Erfindung anhand einer Zeichnung näher erläutert.

Es zeigen:

Fig. 1 eine Seitenansicht eines hydraulisch angetriebenen Kettenfahrzeuges,
Fig. 2 eine Draufsicht auf das Kettenfahrzeug mit einer Lageübersicht der wichtigsten Antriebs- und Steuerelemente,
Fig. 3 einen Schaltplan der erfindungsgemäßen hydraulischen Steuerungsanlage,
Fig. 4 die Schaltungsanordnung aus Fig. 3 bei Kurvenfahrt des Kettenfahrzeuges in Fahrtrichtung nach vorne rechts,
Fig. 5 die Schaltungsanordnung aus Fig. 3 bei Kurvenfahrt des Kettenfahrzeuges in Fahrtrichtung nach hinten rechts.

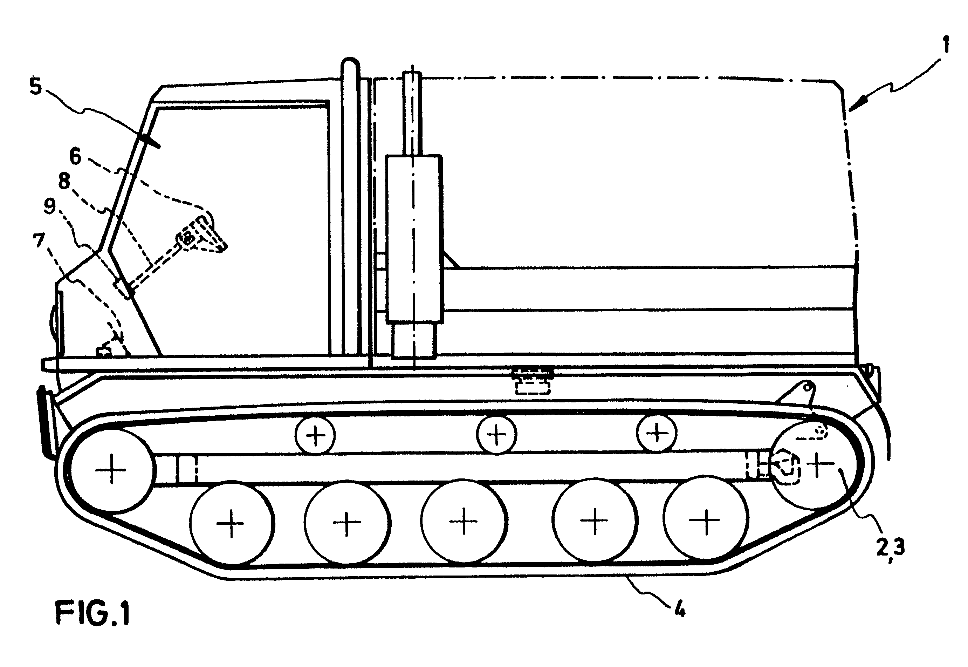

Die Fig.1 zeigt in einer Seitenansicht ein hydraulisches Kettenfahrzeug 1 mit über Antriebsräder 2 und 3 angetriebene Ketten 4. Das Kettenfahrzeug 1 weist darüberhinaus einer Fahrerkabine 5 auf, in welcher in üblicher Weise ein Lenkrad 6 und ein Gaspedal 7 angeordnet ist. Das Lenkrad 6 ist über eine Steuersäule 8 mit einem hydraulischen Steuerungsblock 9 wirkungsverbunden. Das Gaspedal 7 ist außer mit dem üblichen Betätigungsgestänge für den in der Fig.1 nicht dargestellten Verbrennungsmotor mit einem Potentiometer 10 gekoppelt.

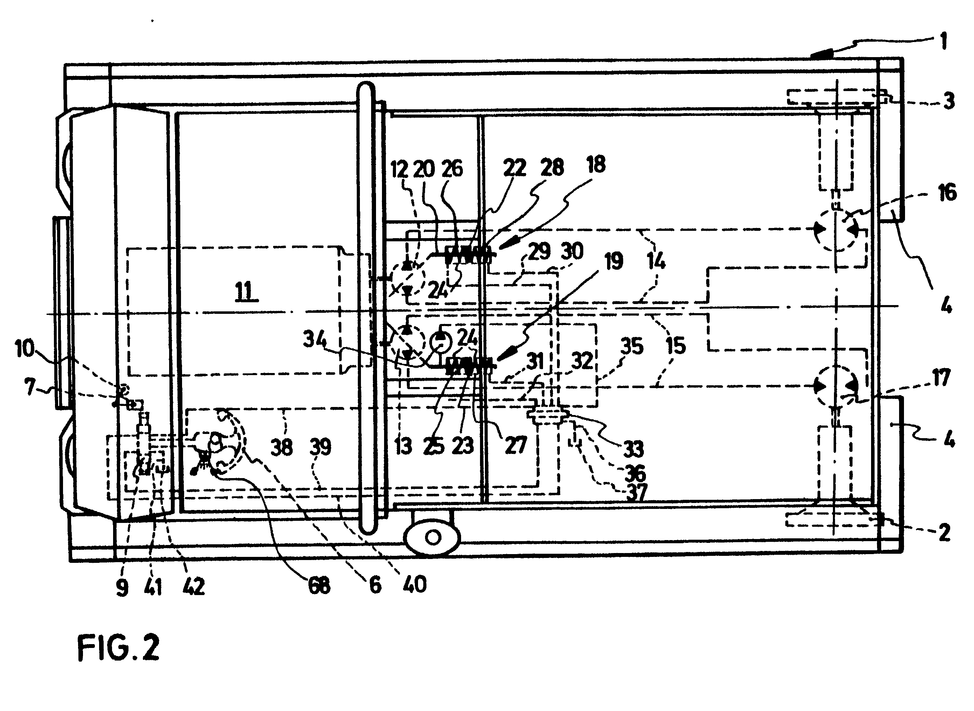

Wendet man sich der Fig. 2 zu, so erkennt man in einer Übersicht die wesentlichen Baugruppen der Steuerungsanlage. Mit Bezugszeichen 11 ist der Verbrennungsmotor angedeutet. Der Verbrennungsmotor 11 treibt zwei hinter ihm liegende hydraulische Fahrwerkspumpen 12 und 13 an, welche über hydraulische Druckleitungen 14 und 15 mit im Heck des Kettenfahrzeuges 1 angeordneten Hydromotoren 16 und 17 in Verbindung stehen. Die Hydromotoren 16 und 17 sind mechanisch mit den Antriebsrädern 2 und 3 verbunden, so daß das Drehmoment des Verbrennungsmotors 11 über die hydraulischen Fahrwerkspumpen 12 und 13, die hydraulischen Druckleitungen 14 und 15, die Hydromotoren 16 und 17 und die Antriebsräder 2 und 3 auf die Ketten 4 übertragen wird.

Die hydraulischen Fahrwerkspumpen 12 und 13 sind bezüglich ihres Pumpenschwenkwinkels einstellbar, so daß sich damit eine Drehmomentwandlung vornehmen läßt.

Für die Verstellung des Pumpenschwenkwinkels der hydraulischen Fahrwerkspumpen 12 und 13 ist für jede der hydraulischen Fahrwerkspumpen 12 bzw. 13 ein hydraulisch betätigbarer Stellzylinder 18 bzw. 19 vorgesehen. In jedem Stellzylinder befindet sich eine axial verschiebbare Kolbenstange 20 bzw. 21 mit einem Stellkolben 22 bzw. 23. Die Stellkolben 22 und 23 werden durch als Druckfeder ausgebildete Rückstellfedern 24 in einer Mittelstellung gehälten. Durch die Stellkolben 22 und 23 werden die Stellzylinder 18 und 19 in Stellzylinderkammern 26 und 28 bzw. 25 und 27 unterteilt. Jede der Stellzylinderkammern 25 bis 28 ist über eine hydraulische Steuerleitung 29, 30, 31 bzw. 32 mit einem zweiten hydraulischen Steuerungsblock 33 verbunden. Der zweite hydraulische Steuerungsblock 33 wird durch eine Speisepumpe 34 über eine hydraulische Versorgungsleitung 35 mit Steuerfluid versorgt. Überschüssiges Steuerfluid gelangt über eine hydraulischen Entsorgungsleitung 36 zurück in einen Vorratsbehälter 37.

Von dem zweiten hydraulischen Steuerungsblock 33 aus führt zum einen eine hydraulische Versorgungsleitung 38 zum ersten hydraulischen Steuerungsblock 9. Von diesem führen dann wiederum zwei hydraulische Steuerleitungen 39 und 40 zurück zum zweiten Steuerungsblock 33. Über schüssiges Steuerfluid aus dem ersten Steuerungsblock 9 wird über eine Entsorgungsleitung 41 einem Vorratsbehälter 42 zugeführt, welcher mit dem Vorratsbehälter 37 identisch sein kann.

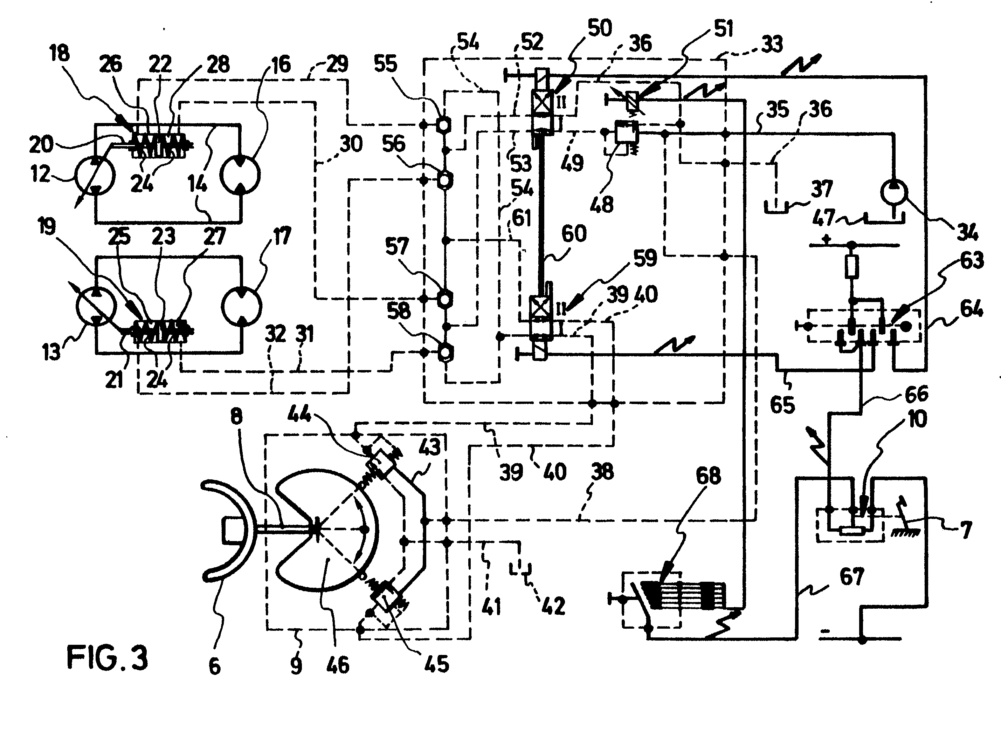

In der Fig.3 ist die gesamte hydraulische Steuerungsanlage des Kettenfahrzeuges 1 gezeigt, wobei auch insbesondere die hydraulischen Steuerungsblöcke 9 und 33 detailliert dargestellt sind.

Zunächst wird der zur Umsetzung der mechanischen Lenkbewegung vorgesehene hydraulische Steuerungsblock 9 näher erläutert. Die zum hydraulischen Steuerungsblock 9 führende Versorgungsleitung 38 führt zu einer Ringleitung 43. In der Ringleitung 43 befinden sich zwei Proportionalventile 44 und 45. Ein Ausgang sowie der Eingang der Proportionalventile sind mit der Ringleitung 43 gekoppelt, während ein zweiter Ausgang mit den hydraulischen Steuerleitungen 39 bzw. 40 verbunden ist. Bei den Proportionalventilen 44 und 45 handelt es sich um vorgespannte Ventile, die erst bei einem bestimmten Systemdruck in der Steuerungsanlage arbeiten.

Die Proportionalventile 44 und 45 sind über eine der Steuersäule 8 des Lenkrades 6 befestigte Kurvenscheibe 46 mechanisch betätigbar. Die Kurvenscheibe 46 ist so ausgebildet, daß der Druck des Steuerfluids hinter den Proportionalventilen 44 und 45 proportional mit dem Lenkeinschlag des Lenkrades 6 wächst. Der mit den ersten Ausgängen der Proportionalventile 44 und 45 verbundene Teil der Ringleitung 43 ist mit der Entsorgungsleitung 41 verbunden.

Nachfolgend wird der zweite hydraulische Steuerungsblock 33 beschrieben. Von der Speisepumpe 34 aus, welche aus einem Vorratsbehälter 47 ansaugt, führt die hydraulische Versorgungsleitung 35 in den Steuerungsblock 33 zu einem ersten Proportionalventil 48. Dieses Proportionalventil besitzt zwei Ausgänge, wovon einer an die Entsorgungsleitung 38 angeschlossen ist, während der andere über eine Steuerleitung 49 zu einem 4/2-Wegeventil 50 führt.

Bei dem Proportionalventil 48 handelt es sich ebenfalls wie bei den bereits beschriebenen Proportionalventilen 44 und 45 um ein vorgespanntes Ventil. Das Proportionalventil 48 wird über ein elektrisch betriebenes Proportionalstellglied 51 betätigt. Ebenso wird das 4/2-Wegeventil 50, wie später noch erläutert wird, elektrisch betätigt. Der zweite Anschluß des 4/2-Wegeventiles 50 führt über die Entsorgungsleitung 36 zurück zum Vorratsbehälter 37. Auf der anderen Seite des 4/2-Wegeventiles 50 sind zwei hydraulische Steuerleitungen 52 und 53 angeschlossen. Die beiden Steuerleitungen 52 und 53 führen zu einer Ringleitung 54 in welcher Wechselventile 55 bis 58 angeordnet sind. Die Anordnung der Wechselventile 55 bis 58 ist derart, daß in der Ringleitung 54 beidseitig der Mündung der Steuerleitung 52 die beiden Wechselventile 55 und 56 angeordnet sind, während die Wechselventile 57 und 58 beidseitig der Mündung der Steuerleitung 53 in der Ringleitung 54 angeordnet sind. Die Wechselventile 55 bis 58 sind derart ausgebildet, daß die in der Ringleitung 54 liegenden Anschlüsse je nach den Druckverhältnissen in der Ringleitung verschlossen oder offen sind. Darüber hinaus verfügt jedes Wechselventil 55 bis 58 über einen weiteren, stets offenen Ausgang, der jeweils mit den hydraulischen Steuerleitungen 29 bis 32 verbunden ist, welche zu den Stellzylindern 18 und 19 führen.

Die beiden aus dem hydraulischen Steuerungsblock 9 herausführenden Steuerleitungen 39 und 40 münden in den Steuerblock 33 ebenfalls in ein 4/2-Wegeventil 59. Dieses ebenfalls elektrisch betätigbare Ventil ist über ein Gestänge 60 mechanisch mit dem 4/2-Wegeventil 50 gekoppelt, so daß beide 4/2-Wegeventile 50 und 59 stets gleichzeitig betätigt weden. Die auf der anderen Seite des 4/2-Wegeventiles 59 liegenden Anschlüsse sind über hydraulische Steuerleitungen 61 und 62 mit der Ringleitung 54 verbunden. Die Steuerleitung 61 mündet dabei zwischen den beiden Wechselventilen 56 und 57 in die Ringleitung 54. Die Steuerleitung 62 dagegen mündet zwischen den Wechselventilen 55 und 58 in die Ringleitung 54.

Im folgenden wird die elektrische Schaltung zur Betätigung der beiden 4/2-Wegeventile 50 und 59 einerseits sowie des ersten Proportionalventiles 48 andererseits näher beschrieben. Der elektrische Schaltkreis umfaßt einen Fahrtrichtungsumkehrschalter 63, der zum einen über je eine elektrische Leitung 64 bwz. 65 mit dem 4/2-Wegeventil 50 bzw. 59 verbunden ist. Der Fahrtrichtungsumkehrschalter 63 läßt sich in drei Stufen schalten. In der in Fig.3 dargestellten neutralen Stellung verbleiben die 4/2-Wegeventile 50 und 59 in ihrer bisherigen Stellung. Wird der Kontakt des Fahrtrichtungsumkehrschalters 63 zur elektrischen Leitung 64 geschlossen, so bewegen sich die beiden 4/2-Wegeventile 50 und 59 in die in Fig.3 dargestellten Stellung I oder verbleiben in dieser. Bei Schließen des Kontaktes des Fahrtrichtungsumkehrschalters 63 zur elektrischen Leitung 65 bewegen sich die 4/2-Wegeventile 50 und 59 in die Stellung II, in welche die den Eingängen zugeordneten Ausgänge der 4/2-Wegeventile 50 und 59 vertauscht werden.

Der Fahrtrichtungsumkehrschalter verfügt noch über einen dritten Ausgang, welcher über eine elektrische Leitung 66 mit dem über das Gaspedal 7 betätigbare Potentiometer 10 verbunden ist. Ein Ausgang des Potentiometers 10 liegt an Masse, während der andere über eine weitere elektrische Leitung 67 mit dem Proportionalstellglied 51 verbunden ist. In der elektrischen Leitung 67 ist in Reihe zu dem Proprotionalstellglied 51 eine Höchstspannungsbegrenzer 68 geschaltet.

Der Fahrtrichtungsumkehrschalter 63 befindet sich, wie er in Fig.3 gezeigt ist, in seiner neutralen Stellung. In dieser Stellung ist weder das Potentiometer 10 mit Strom versorgt, noch befinden sich die beiden miteinander verbundenen und elektrisch betätigbaren 4/2-Wegeventile 50 und 59 in einer definierten Schaltstellung. Sobald mit dem Fahrtrichtungsumkehrschalter 63 eine der beiden Fahrstellungen "vorwärts" oder "rückwärts" gewählt ist, liegt an dem durch das Gaspedal 7 betätigbaren Potentiometer 10 ein Strom an. Durch Verstellen des Gaspedales 7 wird das erste Proprotionalventil 48 proportional abhängig mit dem Proportionalstellglied 51 gesteuert. Die maximale Auslenkung des ersten Proportionalventiles 48 hängt dabei von der vorgewählten Stellung bzw. Spannung des Höchstspannungsbegrenzers 68 ab. Daher ist auch der maximal erreichbare Pumpenschwenkwinkel von der Stellung des Höchstspannungsbegrenzers 68 abhängig.

Das Gaspedal 7 sorgt neben der Betätigung des Potentiometers 10 in bekannter Weise über ein Betätigungselement auch für eine Drehzahländerung des Verbrennungsmotors 11.

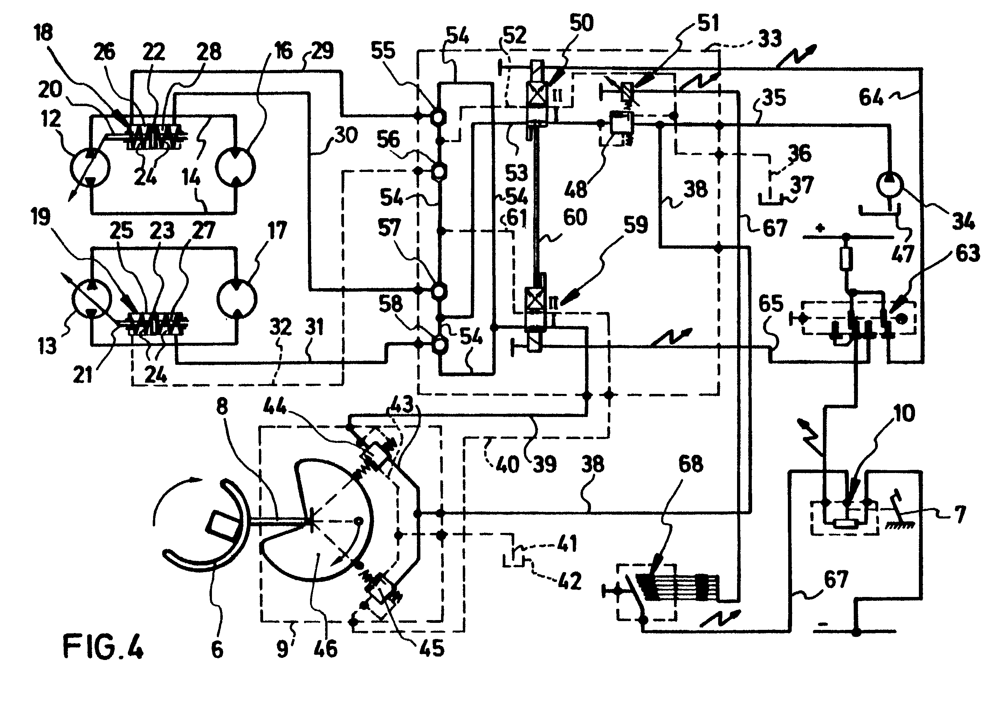

Im folgenden wird die Wirkungsweise der Erfindung beim Betrieb näher erläutert. Am Beispiel einer Vorwärtsfahrt bei gleichzeitiget Kurvenfahrt nach rechts wird anhand der Fig. 4 die Funktion der hydraulischen Steuerungsanlage beschrieben.

Zunächst wird der Verbrennungmotor 11 angelassen, wodurch die Fahrwerkspumpen 12 und 13 anlaufen. Eine Bewegung des Fahrzeuges ist nun aber noch nicht möglich, da der Pumpenschwenkwinkel der hydraulischen Fahrwerkspumpen 12 und 13 noch null ist. Als nächstes wird der Fahrtrichtungsumkehrschalter 63, wie in der Fig.4 gezeigt ist, nach rechts bewegt. Der über die elektrische Leitung 64 fließende Strom bewirkt, daß die beiden 4/2-Wegeventile 50 und 59 in die Schaltstellung I bewegt werden, bzw. in dieser Stellung verbleiben. Dies ist die Stellung für Vorwärtsfahrt. In dieser Stellung können die 4/2-Wegeventile 50 und 59 durch Rasten gehalten werden.

Durch die Betätigung des Fahrtrichtungsumkehrschalters 63 wird zugleich das Potentiometer 10 mit Strom beaufschlagt. Je nach Fahrgelände wird nun der an der Lenksäule angebrachte und mit der Hand betätigbare Höchstspannungsbegrenzer 68 in die gewünschte Fahrstellung gebracht. Wird nun das Gaspedal 7 betätigt, liegt an dem Proportionalstellglied 51 eine Spannung an, welche sich proportional mit der Stellung des Gaspedales ändert und so für eine proportionale Verstellung des ersten Proportionalventiles 48 sorgt. Gleichzeitig baut sich durch die Speisepumpe 34 in dem hydraulischen Steuerungssystem ein Druck auf. Wenn dieser Druck 8 Bar erreicht hat, läßt sich erst die Vorspannung der Proportionalventile 44, 45 und 48 überwinden. Durch weiteres Heruntertreten des Gaspedales 7 strömt also Steuerfluid durch das erste Proportionalventil 48, durch das 4/2-Wegeventil 50 und die Steuerleitung 53 zu den beiden Wechselventilen 57 und 58. Durch den höheren Druck geben diese beiden Wechselventile 57 und 58 den Eingang frei, so daß das Steuerfluid über die Steuerleitungen 30 und 31 zu den vorderen Stellzylinderkammern 28 und 27 der Stellzylinder 18 und 19 gelangt. Dadurch werden die Stellkolben 22 und 23 und die damit verbundenen Kolbenstangen 20 und 21 verschoben, so daß sich der Pumpenschwenkwinkel der hydraulischen Fahrwerkspumpen 12 und 13 vergrößert. Über die Druckleitungen 14 und 15 wird nun Hyrdaulikflüssigkeit zu den Hydromotoren 16 und 17 gepumpt, welche über die Antriebsräder 2 und 3 die Ketten 4 des Fahrzeuges in Bewegung setzen. Durch weiteres Niedertreten des Gaspedales 7 wird der Pumpenschwenkwinkel weiter vergrößert, wodurch die Fahrgeschwindigkeit des Kettenfahrzeuges 1 zunimmt. Eine Ver stellung des Pumpenschwenkwinkels mittels des Gaspedales 7 läßt sich aber nur so lange erreichen, wie die durch den Höchstspannungsbegrenzer 68 vorgewählte maximale Spannung nicht überschritten wird. Wird dieser Spannungswert erreicht, so vergrößert sich der Pumpenschwenkwinkel nicht mehr. Es ist andererseits auch möglich, bei stark ansteigendem Gelände und durch getretenem Gaspedal 7 die Spannung durch den Höchstspannungsbegrenzer 68 zurückzunehmen und damit den Pumpenschwenkwinkel zu verkleinern, um somit ein niedrigeres Übersetzungsverhältnis zu wählen.

Wird nun das Lenkrad 6, wird in der Fig.4 dargestellt ist, nach rechts geschwenkt, so dreht sich die Kurvenscheibe 46 ebenfalls nach rechts und betätigt das rechte Proportionalventil 44. Dieses Proportionalventil, welches über die von der Versorgungsleitung 35 vor dem Proportionalventil 48 abzweigende Versorgungsleitung 38 ebenfalls durch die Speisepumpe 34 mit Druck beaufschlagt ist, läßt nun Steuerfluid über die Steuerleitung 39 durch das 4/2-Wegeventil 59 und die Steuerleitung 62 in die Ringleitung 54 gelangen. Auf diese Weise baut sich zwischen den Wechselventilen 55 und 58 ein Druck auf. Übersteigt der den Wechselventilen 55 und 58 anliegende Druck den hinter dem ersten Proportionalventil 48 anliegenden Systemdruck, so lassen die Wechselventile 55 und 58 das Steuerfluid in die Steuerleitungen 29 und 31 eindringen. Von dort gelangt das Steuerfluid in die hintere Stellzylinderkammer 26 des Stellzylinders 18 bzw. in die vordere Stellzylinderkammer 27 des Stellzylinders 9. Das von der Lenkung stammende Steuerfluid besitzt nun einen höheren Druck als das, welches durch das erste Proportionalventil 48 hindurchgelassen wird. Das bedeutet, daß sich der Druck in der vorderen Stellzylinderkammer 27 des Stellzylinders 19 vergrößert, während bei dem anderen Stellzylinder 18 in der hinteren Stellzylinderkammer 26 ein Druck aufgebaut wird, der dem Antriebsdruck in der vorderen Stellzylinderkammer 28 entgegenwirkt. Durch die Überlagerung des Antriebsdruckes mit dem Druck des Steuerfluids aus der Lenkung bewirkt, daß sich der Steuerkolben 22 des Stellzylinders 18 zurückgewegt, während sich der Steuerkolben 23 des Stellzylinders 19 weiterbewegt. Das Ergebnis ist, daß der hydraulischen Fahrwerkspumpe 12 weniger und der hydraulischen Fahrwerkspumpe 8 mehr Druck zur Verfügung steht, wodurch die rechte Kette 4 des Fahrzeuges 1 langsamer und die linke Kette 4 des Fahrzeuges 1 schneller bewegt wird. Die Abnahme der Geschwindigkeit der rechten Kette ist dabei gleich der Zunahme der Geschwindigkeit der linken Kette. Aus diese Weise wird eine gleichmäßige Kurvenfahrt erzielt, wobei es insbesondere als angenehm empfunden wird, daß die Mitte des Fahrzeuges ihre Geschwindigkeit gegenüber der Geradeausfahrt nicht ändert.

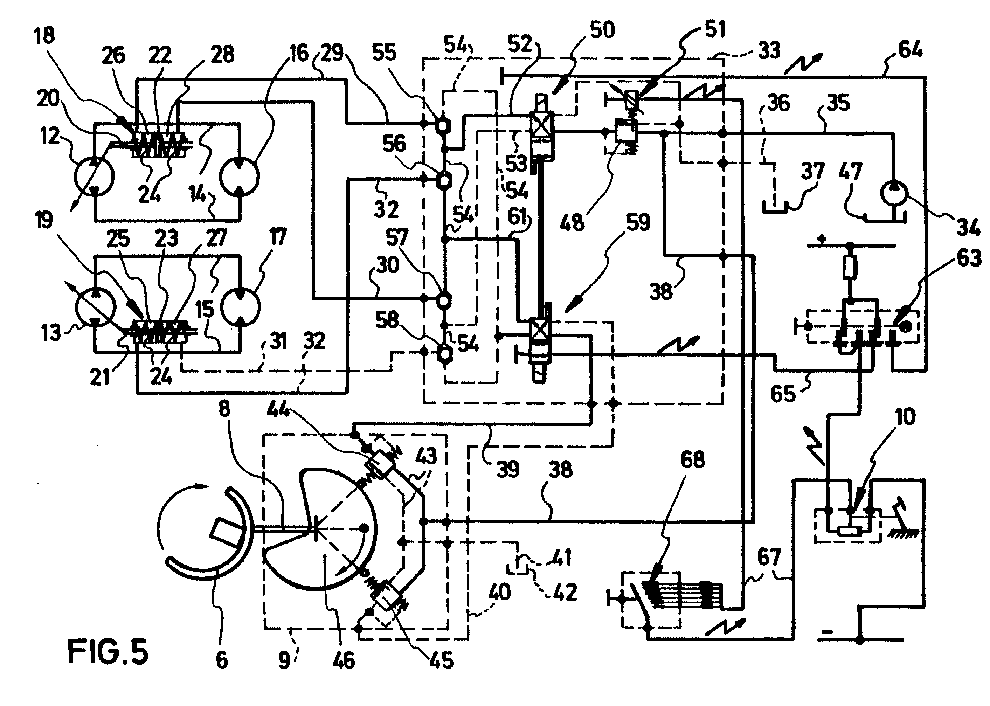

Anhand der Fig.5 wird nunmehr das Rückwärtsfahren des Kettenfahrzeuges 1 beschrieben, wobei auch hier eine Lenkbewegung nach rechts erfolgen soll.

Der Fahrtrichtungsumkehrschalter 63 wird nun, wie in der Fig.5 zu ersehen ist, nach links bewegt, wodurch an der elektrischen Leitung 65 eine Spannung anliegt und die 4/2-Wegeventile 50 und 59 in die Schaltstellung II bewegt werden, in welcher deren Ausgänge vertauscht werden. Wie bereits beschrieben wird mittels Höchstspannungbegrenzer 68 eine bestimmte Fahrstufe vorgewählt und dann das Gaspedal 7 betätigt. Nach Überwinden des Mindestdruckes wird das erste Proportionalventil 48 betätigt, wodurch das Steuerfluid durch die Steuerleitung 49 und 4/2-Wegeventil 50 über die Steuerleitung 52 in die Ringleitung 54 zwischen die beiden Wechselventile 55 und 56 gelangt. Durch den steigenden Druck in der Ringleitung 54 zwischen den beiden Wechselventilen 55 und 56 geben diese ihren Eingang frei, so daß das Steuerfluid über die Steuerleitungen 29 und 32 zu den hinteren Stellzylinderkammern 26 und 25 der Stellzylinder 18 bzw. 19 gelangt.

Der sich in diesen Stellzylinderkammern aufbauende Druck bewirkt nun, daß die Kolbenstangen 20 bzw. 21 in entgegengesetzter Richtung wie bei der Vorwärtsfahrt bewegt werden, so daß sich der Pumpenschwenkwinkel der beiden Fahrwerkspumpen 12 und 13 zwar wiederum gleichsinnig aber in der entgegengesetzten Richtung zur Vorwärtsfahrt vergrößert. Das Kettenfahrzeug 1 fährt nun geradeaus rückwärts.

Beim Einschlag des Lenkrades 6 nach rechts wird nunmehr über die Kurvenscheibe 46 wiederum das Proportionalventil 44 betätigt, so daß über die Steuerleitung 39 durch das 4/2-Wegeventil 59 Steuerfluid über die Steuerleitung 61 in die Ringleitung 54 zwischen die beiden Wechselventile 56 und 57 gelangt. Übersteigt der Druck des Steuerfluids zwischen den beiden Wechselventilen 56 und 57 den Antriebsdruck des Steuerfluids aus dem ersten Proportionalventil 48, so strömt Steuerfluid zum einen durch das Wechselventil 56 über die Steuerleitung 32 zur hinteren Stellzylinderkammer 25 des Stellzylinders 19 und zum anderen durch das Wechselventil 57 über die Steuerleitung 30 zur vorderen Stellzylinderkammer 28 des Stellzylinders 18. Dadurch wird wie bei der zuvor beschriebenen Vorwärtsfahrt bewirkt, daß sich die Kolbenstange 20 zurückbewegt, während die Kolbenstange 21 weiterbewegt wird. Aufgrund der gleichzeitigen Änderung des Pumpenschwenkwinkels der Fahrwerkspumpen 12 und 13 wird die rechte Kette 44 des Kettenfahrzeuges 1 langsamer bewegt, während die linke Kette 4 des Kettenfahrzeuges 1 schneller bewegt wird. Daraus resultiert auch bei der Rückwärtsfahrt des Kettenfahrzeuges 1 eine Kurvenfahrt nach rechts.

Befindet sich der Höchstspannungsbegrenzer 68 in einer Stellung, in welcher er die Höchstspannung auf 0 Volt begrenzt, kann das Kettenfahrzeug 1 auf der Stelle gewendet werden, da sich eine Kette vorwärts bewegt, während sich die andere Kette rückwärts bewegt. Es ist auch möglich, wie allerdings in den Figuren 3 bis 5 nicht dargestellt ist, daß bei vollem Lenkausschlag nach Überwinden einer Sperre ein elektrischer Schalter betätigt wird, welcher die Höchstspannung auf 0 Volt setzt, wodurch dann die in der oben geschilderten Weise ein Wenden des Kettenfahrzeuges 1 auf der Stelle ermöglicht wird. Anstatt nur eine Kurvenscheibe 46 für die beiden Proportionalventile 44 und 45 vorzusehen, ist es auch denkbar zwei Kurvenscheiben zu verwenden, welche auf der Steuersäule 8 übereinander angeordnet sind. Auf diese Weise ist es auch nachträglich möglich, die Geradeausstellung der Lenkung zu justieren. Für die Kurvenfahrt des Fahrzeuges braucht immer nur ein Proportionalventil 44 oder 45 betätigt zu werden.

Ein nicht zu vernachlässigender Vorteil der beschriebenen hydraulischen Steuerungsanlage ist der, daß selbst bei Ausfall der elektrischen Stromversorgung die Lenkbarkeit des Fahrzeuges noch immer gewährleistet ist.

## Patentansprüche

1. Hydraulische Steuerungsanlage für die Geschwindigkeits- und Richtungsänderung eines hydraulisch getriebenen Kettenfahrzeuges (1) mit einer Speisepumpe (34) für das Steuerfluid und hydraulischen Fahrwerkspumpen (12, 13) mit durch das Steuerfluid beaufschlagten Stellzylindern (18, 19) für die Verstellung des Pumpenschwenkwinkels, wobei die Stellzylinder (18, 19) jeweils mit zwei durch einen Stellkolben (22, 23) voneinander getrennten Stellzylinderkammern (26, 28 bzw. 25, 27) versehen sind, wobei für die Geschwindigkeitsänderung in einer von der Speisepumpe (34) kommenden Versorgungsleitung (35) ein Proportionalventil (48) vorgesehen ist, welches mit den Stellzylinderkammern (25 bis 28) verbnden ist, und wobei ferner für die Richtungsänderung ein mechanisch gesteuertes Druckregelventil (44, 45) mit jeweils zwei entgegengesetzt wirkenden Stellzylinderkammern (26, 27 bzw. 28, 25) in Verbindung steht, dadurch gekennzeichnet, daß die Stellzylinderkammern (25 bis 28) über Wechselventile (55 bis 58) unabhängig jeweils mit dem Proportionalventil (48) und mit dem mechanisch gesteuerten Druckregelventil (44, 45) verbunden sind, wobei das mechanisch gesteuerte Druckregelventil (44, 45) an eine Versorgungsleitung (38) angeschlossen ist, die vor dem Proportionalventil (48) von der Versorgungsleitung (35) abzweigt.

2. Steuerungsanlage nach Anspruch 1, dadurch gekennzeichnet, daß zwei zweite Proportionalventile (44,45) vorhanden sind, wovon das eine (44) für die Richtungsänderung nach rechts und das andere (45) für die Richtungsänderung nach links vorgesehen ist.

3. Steuerungsanlage nach Anspruch 2, dadurch gekennzeichnet, daß die beiden zweiten Proportionalventile (44,45) mittels wenigstens einer an der Steuersäule eines Lenkrades (6) angebrachter Kurvenscheibe (46) betätigbar sind.

4. Steuerungsanlage nach mindestens einem der Ansprüche 1-3, dadurch gekennzeichnet, daß das erste Proportionalventil (48) mittels eines durch ein ein Potentiometer (10) umfassendes Gaspedal (7) betätigbaren elektrischen Proportionalstellgliedes (51) steuerbar ist.

5. Steuerungsanlage nach Anspruch 4, dadurch gekennzeichnet, daß in Reihe zu dem Potentiometer (10) ein betätigbarer Höchstspannungsbegrenzer (68) für die Begrenzung der größtmöglichen Auslenkung des Proportionalventiles (48) vorgesehen ist.

6. Steuerungsanlage nach Anspruch 5, dadurch gekennzeichnet, daß der Höchstspannungsbegrenzer (68) von Hand betätigbar an der Lenksäule angebracht ist.

7. Steuerungsanlge nach mindestens einem der Ansprüche 1-6, dadurch gekennzeichnet, daß zwischen dem ersten Proportionalventil (48) und den Wechselventilen (55 bis 58) ein 4/2-Wegeventil (50) derart angeordnet ist, daß zur Richtungsumkehr des Fahrzeuges (1) in einer zweiten Schaltstellung die jeweils anderen gleichwirkenden Stellzylinderkammern (26,25) der Stellzylinder ( 18, 19) mit dem Proportionalventil (48 ) verbunden sind.

8. Steuerungsanlage nach Anspruch 7, **dadurch gekennzeichnet,** daß das 4/2-Wegeventil (50) mit einem weiteren zwischen den zweiten Proportionalventilen (44,45) und den Wechselventilen (55 bis 58) angeordneten 4/2-Wegeventil (59) derart gekoppelt ist, daß bei Richtungsumkehr des Fahrzeuges (1) die jeweils anderen entgegengesetzt wirkenden Stellzylinderkammern (28,25) bzw. (26,27) der Stellzylinder (18,19) mit den zweiten Proportionalventilen (44,45) verbunden sind.

9. Steuerungsanlage nach mindestens einem der Ansprüche 1-8, **dadurch gekennzeichnet,** daß zwei Fahrwerkspumpen (12,13) mit zwei Stellzylindern (18 ,19 ) vorgesehen sind, deren Stellzylinderkammern (25 bis 28) über vier Wechselventile (55 bis 58) einerseits über das erste 4/2-Wegeventil (50) mit dem ersten Proportionalventil (48) für die Geschwindigkeitsänderung und andererseits über das zweite 4/2-Wegeventil (59) mit den zweiten Proportionalventilen (44,45) für die Richtungsänderung verbunden sind.

10. Steuerungsanlage nach mindestens einem der Ansprüche 7 - 9, **dadurch gekennzeichnet,** daß die miteinander gekoppelten 4/2-Wegeventile (50,59) über einen Fahrtrichtungsumkehrschalter (63) elektrisch betätigbar sind.

**Revendications**

1. Dispositif de commande hydraulique pour le changement de la vitesse et de la direction d'un véhicule chenillé (1) à entraînement hydraulique, avec une pompe d'alimentation (34) pour le fluide de commande et des pompes hydrauliques de mécanisme de roulement (12, 13) avec des vérins de réglage (18, 19) alimentés en fluide de commande pour la variation de l'angle de pivotement des pompes, les vérins de réglage (18, 19) présentant chacun deux chambres de vérin de réglage (26, 28 et respectivement 25, 27) séparées par un piston de réglage (22, 23), une soupape proportionnelle (48) étant prévue pour la variation de vitesse dans une conduite d'alimentation (35) venant de la pompe d'alimentation (34) et reliée aux chambres de vérin de réglage (25 à 28), et une soupape régulatrice de pression (44, 45) à commande mécanique pour le changement de direction communiquant, en outre, avec respectivement deux chambres de vérin de réglage à effet opposé (26, 27 et respectivement 28, 25), caractérisé en ce que les chambres de vérin de réglage (25 à 28) sont respectivement raccordées indépendamment, par l'intermédiaire de sélecteurs de circuit (55 à 58), à la soupape proportionnelle (48) et à la soupape régulatrice de pression à commande mécanique (44, 45), la soupape régulatrice de pression à commande mécanique (44, 45) étant raccordée à une conduite d'alimentation (38) qui part de la conduite d'alimentation (35) en amont de la soupape proportionnelle (48).

2. Dispositif de commande selon la revendication 1, caractérisé en ce qu'il comprend deux secondes soupapes proportionnelles (44, 45) dont l'une (44) est prévue pour le changement de direction à droite et l'autre (45) pour le changement de direction à gauche.

3. Dispositif de commande selon la revendication 2, caractérisé en ce que les deux secondes soupapes proportionnelles (44, 45) peuvent être actionnées au moyen d'au moins un disque à came (46) monté sur la colonne de direction d'un volant (6).

4. Dispositif de commande selon au moins l'une des revendications 1 à 3, caractérisé en ce que la première soupape proportionnelle (48) peut être commandée au moyen d'un organe de réglage proportionnel électrique (51) actionnable par une pédale d'accélération (7) comportant un potentiomètre (10).

5. Dispositif de commande selon la revendication 4, caractérisé en ce qu'il comprend, en série avec le potentiomètre (10), un limiteur de très haute tension (68) pouvant être actionné pour la limitation de la déviation maximale possible de la soupape proportionnelle (48).

6. Dispositif de commande selon la revendication 5, caractérisé en ce que le limiteur de très haute tension (68) est monté sur la colonne de direction de façon à pouvoir être actionné à la main.

7. Dispositif de commande selon au moins l'une des revendications 1 à 6, caractérisé en ce que, entre la première soupape proportionnelle (48) et les sélecteurs de circuit (55 à 58), est disposée une soupape à 4/2 voies (50) de telle façon que, pour l'inversion du sens de la marche du véhicule (1), respectivement les autres chambres de vérin de réglage (26, 25), à action identique, des vérins de réglage (18, 19) sont raccordées, dans une deuxième position de commande, à la soupape proportionnelle (48).

8. Dispositif de commande selon la revendication 7, caractérisé en ce que la soupape à 4/2 voies (50) est couplée avec une autre soupape à 4/2 voies (59) disposée entre les secondes soupapes proportionnelles (44, 45) et les sélecteurs de circuit (55 à 58) de telle façon que, lors de l'inversion du sens de la marche du véhicule (1), chacune des autres chambres de vérin de réglage (28, 25) et respectivement (26, 27), à action opposée, des vérins de réglage (18, 19) sont raccordées aux secondes soupapes proportionnelles (44, 45).

9. Dispositif de commande selon au moins l'une des revendications 1 à 8, caractérisé en ce qu'il comprend deux pompes de mécanisme de roulement (12, 13) avec deux vérins de réglage (18, 19) dont les chambres de vérin de réglage (25 à 28) sont reliées d'une part, par l'intermédiaire de quatre sélecteurs de circuit (55 à 58) et de la première soupape à 4/2 voies (50), à la première soupape proportionnelle (48) pour le changement de vitesse et, d'autre part, par l'intermédiaire de la seconde soupape à 4/2 voies (59), aux secondes soupapes proportionnelles (44, 45) pour le changement de direction.

10. Dispositif de commande selon au moins l'une des revendications 7 à 9, caractérisé en ce que les soupapes à 4/2 voies (50, 59) couplées peuvent être actionnées électriquement par l'intermédiaire d'un inverseur de marche (63).

**Claims**

1. Hydraulic control installation for the variation of speed and direction of a hydraulically driven track-laying vehicle (1) having a feed pump (34) for the control fluid and hydraulic chassis pumps (12, 13) with servo-cylinders (18, 19) stressed by the control fluid for the adjustment of the pump pivot angle, the servo-cylinders (18, 19) being respectively provided with two servo-cylinder chambers (26, 28 or 25, 27) mutually separated by a servo-piston (22, 23), a proportional valve (48) being provided for the speed variation in a supply line (35) coming from the feed pump (34), said valve being connected to the servo-cylinder chambers (25 to 28), a mechanically controlled pressure regulator valve (44, 45) which communicates respectively with two opposite acting servo-cylinder chambers (26, 27 or 28, 25) further being provided for the directional variation, characterized in that the servo-cylinder chambers (25 to 28) are respectively connected independently through change valves (55 to 58) with the proportional valve (48) and with the mechanically controlled pressure regulator valve (44, 45), the mechanically controlled pressure regulator valve (44, 45) being connected to a supply line (38) which branches from the supply line (35) before the proportional valve (48).

2. Control installation according to Claim 1, characterized in that two second proportional valves (44, 45) are present, the one (44) of which is provided for the directional variation to the right and the other (45) for the directional variation to the left.

3. Control installation according to Claim 2, characterized in that the two second proportional valves (44, 45) are actuable by means of at least one cam plate (46) attached to the steering column of a steering wheel (6).

4. Control installation according to at least one of claims 1–3, characterized in that the first proportional valve (48) is controllable by means of an electrical proportional servo-element (51) actuable by an accelerator pedal (7) which comprises a potentiometer (10).

5. Control installation according to Claim 4, characterized in that an actuable maximum voltage limiter (68) to limit the maximum possible deviation of the proportional valve (48) is provided in series with the potentiometer (10).

6. Control installation according to Claim 5, characterized in that the maximum voltage limiter (68) is attached to the steering column for manual actuation.

7. Control installation according to at least one of Claims 1–6, characterized in that a 4/2-way valve (50) is arranged between the first proportional valve (48) and the change valves (55 to 58) so that to reverse the direction of the vehicle (1) the respective other coacting servo-cylinder chambers (26, 25) of the servo-cylinders (18, 19) are connected to the proportional valve (48) in a second switching position.

8. Control installation according to Claim 7, characterized in that the 4/2-way valve (50) is coupled to a further (4/2-way valve (59) arranged between the second proportional valves (44, 45) and the change valves (55 to 58) so that upon a reversal of direction of the vehicle (1) the respective other opposite-acting servo-cylinder chambers (28, 25) and (26, 27) of the servo-cylinders (18 19) are connected to the second proportional valves (44, 45).

9. Control installation according to at least one of Claims 1–8, characterized in that two chassis pumps (12, 13) are provided with two servo-cylinders (18, 19), the servo-cylinder chambers (25 to 28) of which are connected through four change valves (55 to 58) through the first 4/2-way valve (50) to the first proportional valve (48) for the speed variation on the one hand, and through the second (4/2-way valve (59) to the second proportional valves (44, 45) for the directional variation on the other hand.

10. Control installation according to at least one of Claims 7–9, characterized in that the mutually coupled 4/2-way valves (50, 59) are actuable electrically through a travel direction reversing switch (63).

FIG.1

EP 0 236 511 B1

FIG.2

EP 0 236 511 B1

FIG.3

FIG.4

EP 0 236 511 B1

FIG.5